# EUROPÄISCHE PATENTSCHRIFT

(11) **EP 1 744 920 B1**
(45) Veröffentlichungstag und Bekanntmachung des Hinweises auf die Patenterteilung: **19.01.2011**
(21) Anmeldenummer: 05740727.2
(22) Anmeldetag: 04.04.2005
(51) Int. Cl.: B60J 7/12

(54) **DACHSTRUKTUR FÜR EIN ZU ÖFFNENDES STARRES KRAFTFAHRZEUGDACH**
ROOF STRUCTURE FOR A RIGID AUTOMOTIVE ROOF THAT CAN BE OPENED
STRUCTURE TOIT D'UN TOIT RIGIDE A OUVRIR D'UN VEHICULE AUTOMOBILE

(30) Priorität: 16.04.2004 DE 102004018606
(43) Veröffentlichungstag der Anmeldung: 24.01.2007
(73) Patentinhaber: Wilhelm Karmann GmbH, 49084 Osnabrück (DE)
(72) Erfinder: SCHRÖDER, Michael, 49082 Osnabrück (DE)
(74) Vertreter: Kronthaler, Schmidt & Coll.
(86) Internationale Anmeldenummer: PCT/DE2005/000593
(87) Internationale Veröffentlichungsnummer: WO 2005/100065

(56) Entgegenhaltungen:
- EP-A- 0 967 100
- WO-A-2004/096592
- DE-A1- 4 203 228
- DE-A1- 10 063 152
- DE-C1- 19 804 990

## Beschreibung

Die Erfindung betrifft eine Dachstruktur für ein zu öffnendes starres Kraftfahrzeugdach, mit dem insbesondere ein Personenkraftwagen als offenes Fahrzeug oder als geschlossenes Fahrzeug verwendet werden kann. Insbesondere ist die erfindungsgemäße Dachstruktur für ein zweisitziges Cabriolet anwendbar.

Aus der DE 296 22 436 U1 ist ein Kraftfahrzeugdach mit versenkbaren Dachteilen bekannt, das starre, nicht zu öffnende seitliche Dachrahmenteile besitzt. Ein vorderes und ein hinteres Dachteil sind um eine senkrecht zur Fahrzeuglängsebene liegende Achse schwenkbar.

Die DE 100 21 464 A1 betrifft ebenfalls ein Fahrzeug mit einem zu öffnenden Fahrzeugdach, das karosseriefeste Dachlängsholme besitzt. Ferner ist eine bewegliche Dachteileinrichtung zum wahlweisen Verschließen oder zumindest teilweisem Freigeben der Dachöffnung sowie mit einer sich an das Fahrzeugdach anschließenden Heckscheibe vorgesehen. Die Dachteileinrichtung weist Dachteilelemente auf, die an seitlichen Führungen verschiebbar geführt und beim Öffnen der Dachteileinrichtung in einen hinteren Ablageraum ablegbar sind, wobei sie beispielsweise ziehharmonikaartig gefaltet sind oder rolloartig aufgerollt sind. Die Heckscheibe ist in eine Stellung absenkbar, in der sie aus der Heckscheibenöffnung des Dachrahmens entfernt ist und zumindest teilweise unter einer Kofferraumklappe angeordnet ist. Die Dachteilelemente bzw. Lamellen werden entlang der seitlichen Dachlängsholme und in den Ablageraum in Fahrzeuglängsrichtung verschoben.

Die DE 42 03 228 C2 betrifft eine ähnliche Konstruktion, bei der ein Faltdach, Lamellendach oder Rollodach in einen heckseitig im Fahrzeug vorgesehenen Stauraum in Fahrzeuglängsrichtung zum Öffnen des Fahrzeugdachs verschoben wird. Die B-Säulen und die C-Säulen des Fahrzeugs bilden zusammen mit seitlichen Dachrahmenteilen und dem hinteren Dachrahmenteil ein Viergelenk, das nach Absenken der Heckscheibe und der hinteren und vorderen Seitenscheiben mittels eines Antriebs nach hinten schwenkbar ist.

Bei dem in der DE 198 04 990 C1 beschriebenen Cabrioletverdeck für ein Kraftfahrzeug sind eine Vielzahl von miteinander verbundenen Einzellamellen vorgesehen, die in der offenen Stellung in einen Stauraum eingebracht sind. Sie werden aus der geschlossenen Stellung dorthin in Fahrzeuglängsrichtung verschoben, und rolladenartig um eine Verdeckrolle aufgewickelt. Die Dachrahmen und die C-Säulen des Fahrzeugs sind in den hinteren Bereich des Kraftfahrzeugs absenkbar, wobei die vorderen Dachrahmen um eine vertikale Achse in Richtung auf den hinteren Dachrahmen in den Fahrzeuginnenraum schwenkbar sind. Nach dem Verschwenken werden die vorderen und hinteren Dachrahmen zusammen entlang der Innenseite der C-Säule verschoben, so dass weder der vordere Dachrahmen noch der hintere Dachrahmen über die C-Säule hinausragen. Anschließend wird die aus dem Dachrahmen und der C-Säule bestehenden Einheit in die Karosserie des Fahrzeugs versenkt.

Aus der DE 100 63 152 A1 ist schließlich ein Klappdachwagen bekannt, bei dem ein vorderes Dachteil, das auch seitliche Dachrahmenteile enthält, und ein hinteres Dachteil, das ebenfalls seitliche Dachrahmenteile enthält, um eine senkrecht zur Fahrzeuglängsebene verlaufende Achse zueinander verschwenkbar sind und in einen Stauraum unter einen Heckdeckel eines Kraftfahrzeugs ablegbar sind.

Die gattungsgemäße EP 1 618 014 B1 beschreibt eine Dachstruktur für ein zu öffnendes starres Kraftfahrzeugdach mit einem vorderen Dachteil und einem hinteren Dachteil. An das vordere Dachteil und das hintere Dachteil schließen sich jeweils seitliche Dachrahmenteile an. Die vorderen und hinteren Dachrahmenteile sind bezüglich einander um eine senkrechte Fahrzeuglängsebene verlaufende Achse schwenkbar und in einer Position, in der ihre Innenseiten zueinander gerichtet sind, ablegbar. Das vordere Dachteil und das hintere Dachteil sind jeweils bezüglich der Dachrahmenteile um eine senkrecht zur Fahrzeuglängsebene verlaufende Achse verschwenkbar.

Der Erfindung liegt die Aufgabe zugrunde, eine Dachstruktur für ein zu öffnendes starres Kraftfahrzeugdach vorzusehen, das vollständig zu öffnen ist und das im offenen Zustand des Fahrzeugdachs wenig Stauraum im Fahrzeugheckbereich beansprucht.

Diese Aufgabe wird mit einer Dachstruktur mit den Merkmalen des Anspruchs 1 gelöst. Bevorzugte Ausführungsformen sind in den abhängigen Ansprüchen angegeben.

Die Ausdrücke "vorne", "hinten", "seitlich" beziehen sich dabei auf eine Orientierung in Vorwärtsfahrtrichtung des Kraftfahrzeugs. Entsprechend bezeichnet die Fahrzeuglängsrichtung des Kraftfahrzeugs diejenige Richtung, in der das Fahrzeug bei Geradeausfahrt und Vorwärtsfahrt fährt. Ferner ist die "Innenseite" von Dachelementen diejenige Seite, die der Fahrgastzelle zugewandt ist, wenn das Dach geschlossen ist.

Der Erfindung liegt der Gedanke zugrunde, eine Öffnungsmöglichkeit für ein starres Kraftfahrzeugdach dadurch vorzusehen, dass die Dachteile ebenso wie die Dachrahmenteile verschwenkt werden und zwar um jeweils Achsen, die senkrecht zur Fahrzeuglängsebene liegen. Dadurch ist es möglich, eine Verschiebung der Dachteile entlang der Dachrahmenteile in Fahrzeuglängsrichtung zu vermeiden. Somit können verhältnismäßig großflächige Dachteile verwendet werden, was zu einem ansprechenden Erscheinungsbild beiträgt. Dadurch, dass gleichzeitig sowohl die Dachrahmenteile bezüglich einander verschwenkbar sind als auch die Dachteile jeweils bezüglich der einzelnen Dachrahmenteile verschwenkbar sind, kann überdies das Fahrzeug vollständig geöffnet werden, ohne dass Dachrahmenteile die vollständige Öffnung des Fahrzeugdachs behindern.

Nachfolgend wird die Erfindung beispielhaft anhand der beigefügten Figuren beschrieben, in denen:
Fig. 1 den Heckbereich eines Fahrzeugs mit geschlossenem Dach in perspektivischer Ansicht zeigt;
Fig. 2 den Heckbereich des Fahrzeugs am Anfang der Öffnungsbewegung des Dachs zeigt;
Fig. 3 einen weiter fortgeschrittenen Zustand der Öffnungsbewegung des Dachs zeigt;
Fig. 4 einen noch weiter fortgeschrittenen Zustand der Öffnungsbewegung der Dachstruktur zeigt;
Fig. 5 eine seitliche Ansicht der Kinematik der erfindungsgemäßen Dachstruktur zeigt;
Fig. 6 den Heckbereich des Fahrzeugs bei nahezu vollständig geöffnetem Dach in perspektivischer Ansicht zeigt;
Fig. 7 die Endstellung der Dachstruktur bei geöffnetem Fahrzeugdach zeigt, wobei der Heckdeckel sowie die Kotflügelbereiche des Fahrzeugs weggelassen sind; und

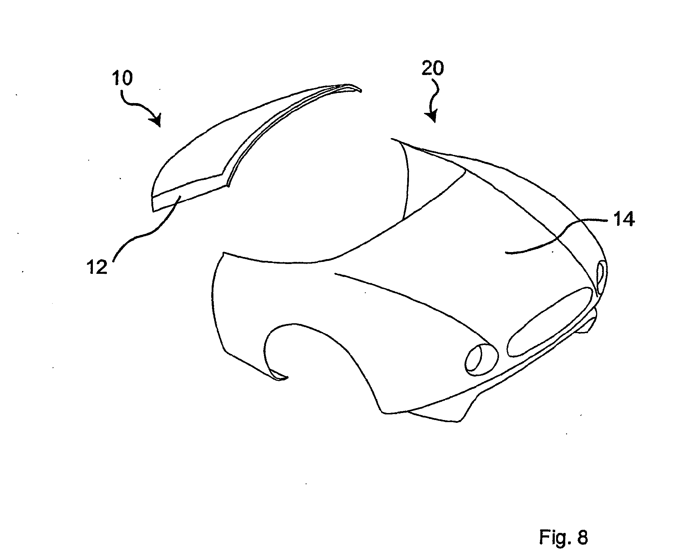

Fig. 8 das Fahrzeug mit der erfindungsgemäßen Dachstruktur bei offenem Dach zeigt.

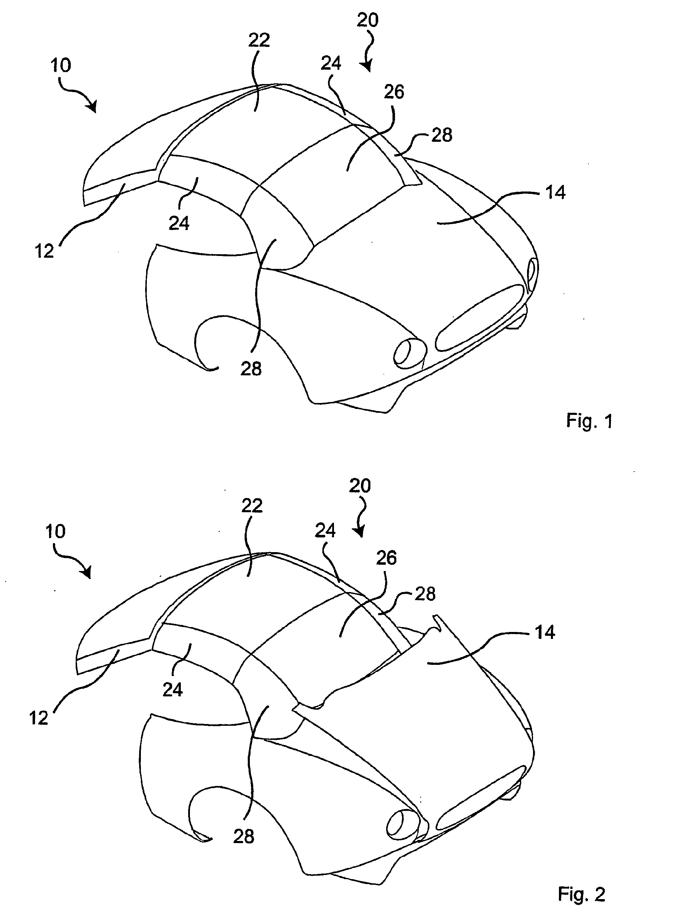

Fig. 1 zeigt in perspektivischer Ansicht eine Ausführungsform der erfindungsgemäßen Dachstruktur für ein zu öffnendes starres Kraftfahrzeugdach. Fig. 1 zeigt den Heckbereich 10 eines Fahrzeugs. Die Dachstruktur 20, die an einen Windschutzscheibenrahmen 12 angrenzend angeordnet ist, enthält ein vorderes Dachteil 22, vordere seitliche Dachrahmenteile 24, ein hinteres Dachteil 26 sowie hintere, seitliche Dachrahmenteile 28. Das hintere Dachteil 26 grenzt an seiner Vorderkante an das vordere Dachteil 22 an, das wiederum an seiner vorderen Kante an den Windschutzscheibenrahmen 12 anstößt, wenn das Fahrzeugdach geschlossen ist. Das hintere Dachteil 26 grenzt mit seinem hinteren Rand an den Heckdeckel 14 des Kraftfahrzeugs an. Die seitlichen Dachrahmenteile 24, 28 sind jeweils links und rechts (betrachtet in Fahrzeugvorwärtsfahrtrichtung) des vorderen Dachteils 22 beziehungsweise des hinteren Dachteils 26 angeordnet, wobei sich die vorderen, seitlichen Dachrahmenteile 24 in Längsrichtung soweit wie das vordere Dachteil 22 und die hinteren seitlichen Dachrahmenteile 28 in Fahrzeuglängsrichtung soweit wie das hintere Dachteil 26 erstrecken.

Das vordere Dachteil 22 und das hintere Dachteil 26 sind jeweils einstückig gestaltet und als starre Bauteile gebildet (Hardtop). In das hintere Dachteil 26 ist eine Heckscheibe integriert beziehungsweise es wird durch die Heckscheibe gebildet. Nach Bedarf kann in das vordere Dachteil 22 beispielsweise ein Sonnendach oder ähnliches integriert sein.

Zum Öffnen der Dachstruktur wird zunächst, wie es in Fig. 2 gezeigt ist, der Heckdeckel 14 derart aufgeschwenkt, dass sich sein frontseitiger Endbereich anhebt und somit Stauraum für die Dachstruktur 20 freigibt beziehungsweise das Einbringen der Dachstruktur in den Bereich unter den Heckdeckel 14 ermöglicht. Die Schwenkachse liegt beispielsweise am heckseitigen Abschluss des Heckdeckels 14.

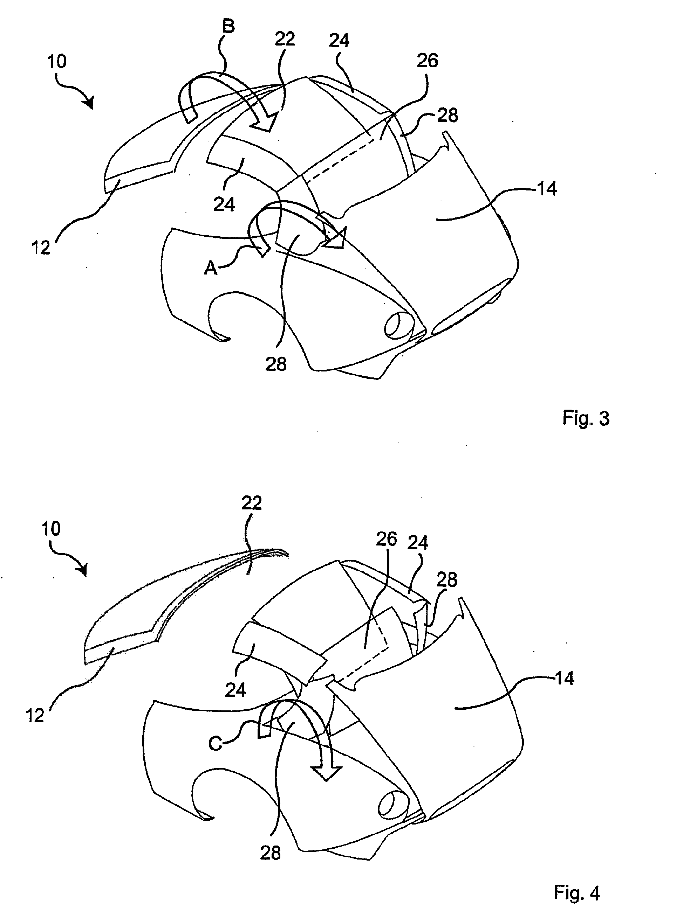

Wie es in Fig. 3 dargestellt ist, werden anschließend oder zeitgleich das vordere Dachteil 22 sowie die vorderen, seitlichen Dachrahmenteile 24 vom Windschutzscheibenrahmen 12 getrennt und bewegen sich zusammen mit den am heckseitigen Ende der vorderen Dachrahmenteile 24 angelenkten hinteren, seitlichen Dachrahmenteilen 28. Die hinteren Dachrahmenteile 28 führen eine Schwenkbewegung derart aus, dass sie um ihre heckseitigen Anlenkachse zur Fahrzeugkarosserie nach hinten schwenken, wodurch sie mit ihren Außenseiten Richtung Boden ausgerichtet werden. Die vorderen Dachrahmenteile 24 werden durch ihre Verbindung zu den hinteren Dachrahmenteilen 28 mitbewegt und gleichzeitig durch die Scharnierverbindung zwischen den vorderen Dachrahmenteilen 24 und den hinteren Dachrahmenteilen 28 bezüglich der hinteren Dachrahmenteile 28 in einer Richtung entgegengesetzt zur Schwenkrichtung der hinteren seitlichen Dachrahmenteile 28 verschwenkt, so dass ihre Unterseiten sich den nach oben gerichteten Unterseiten der hinteren, seitlichen Dachrahmenteile 28 annähern. Betrachtet man das Fahrzeug in einer seitlichen Ansicht auf die linke Außenseite des Fahrzeugs, so schwenken die hinteren, seitlichen Dachrahmenteile in einer Richtung A im Uhrzeigersinn bezüglich der Karosserie, während die vorderen, seitlichen Dachrahmenteile 24 bezüglich der hinteren, seitlichen Dachrahmenteile 28 in einer Richtung entgegen dem Uhrzeigersinn schwenken.

Im einfachsten Fall ist die Verbindung zwischen den Dachrahmenteilen 24, 28 und den Dachteilen 22, 26 ein Scharnier. Alternativ können jedoch auch z.B. Scherenmechanismen vorgesehen werden, was bedeutet, dass die Schwenkachsen relativ zu den Dachrahmenteilen bzw. den Dachteilen wandern.

Gleichzeitig führt das vordere Dachteil 22 eine Schwenkbewegung relativ zu den vorderen, seitlichen Dachrahmenteilen 24 aus. In der dargestellten Ausführungsform liegt die Schwenkachse sowie der Scharnierpunkt zwischen dem vorderen Dachteil 22 und den vorderen Dachrahmenteilen 24 an einem vorderen Endbereich des vorderen Dachteils 22, d.h. deutlich bezüglich der Mitte des vorderen Dachteils 22 nach vorne versetzt. Das hintere Dachteil 26 bleibt am Anfang der Schwenkbewegung der Dachstruktur 20 in seiner Lage relativ zu den hinteren Dachrahmenteilen 28 unverändert, d.h. es führt die Schwenkbewegung, die durch den Pfeil A angegeben ist, ebenfalls aus. Durch diese Schwenkbewegung nähert sich das vordere Dachteil 22 einer Position an, in der es parallel zum hinteren Dachteil 26 wird und zwar derart, dass seine außenseitige Fläche auf die innenliegende Fläche des hinteren Dachteils 26 gerichtet ist. Betrachtet aus einer Seitenansicht auf die linke Seite des Kraftfahrzeugs, schwenkt das vordere Dachteil somit in einer Richtung B im Uhrzeigersinn bezüglich der vorderen Dachrahmenteile 24.

Im weiteren Verlauf der Öffnungsbewegung der Dachstruktur 20, der in Fig. 4 dargestellt ist, führt das hintere Dachteil 26, das eine Scharnierverbindung zu den hinteren seitlichen Dachrahmenteilen 28 in einem zentralen Bereich von ihm in Fahrzeuglängsrichtung aufweist, um diese Achse ebenfalls eine Drehbewegung aus, die in Fig. 4 mit dem Pfeil C angegeben ist. Die Richtung C der Schwenkbewegung ist dabei entgegengesetzt zu derjenigen des vorderen Dachteils 22 bezüglich der vorderen Dachrahmenteile 24. Betrachtet in einer Seitenansicht auf die linke Seite des Kraftfahrzeugs bedeutet dies, dass das hintere Dachteil 26 bezüglich der hinteren, seitlichen Dachrahmenteile 28 in einer Richtung entgegen dem Uhrzeigersinn verdreht wird. Dadurch bleiben das vordere und das hintere Dachteil 22, 26 nahezu parallel zueinander, während die vorderen Dachrahmenteile 24 und die hinteren Dachrahmenteile 28 weiter aufeinander gefaltet werden und in den Heckbereich des Fahrzeugs, insbesondere unter den Heckdeckel 14, eingebracht werden.

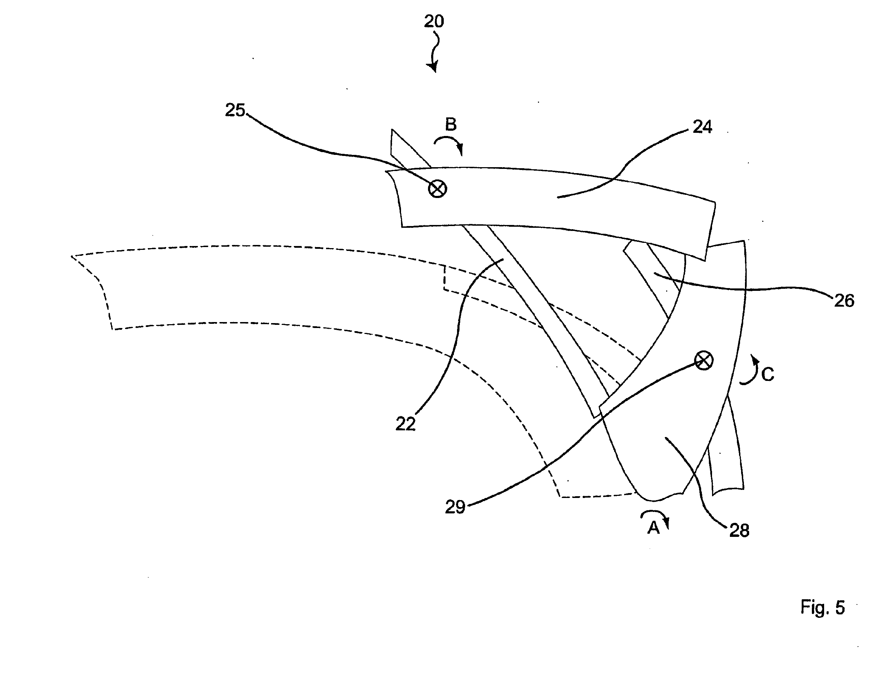

Eine Seitenansicht auf die wesentlichen Bauteile der Dachstruktur 20 (betrachtet in einer Richtung auf die linke Seite des Kraftfahrzeugs) ist in Fig. 5 dargestellt. In Fig. 5 ist mit Strich-Punkt-Linien die geschlossene Position des Dachs angedeutet. Die Positionen der Dachelemente entsprechend einem Öffnungszustand von Fig. 4 sind mit durchgezogenen Linien angegeben.

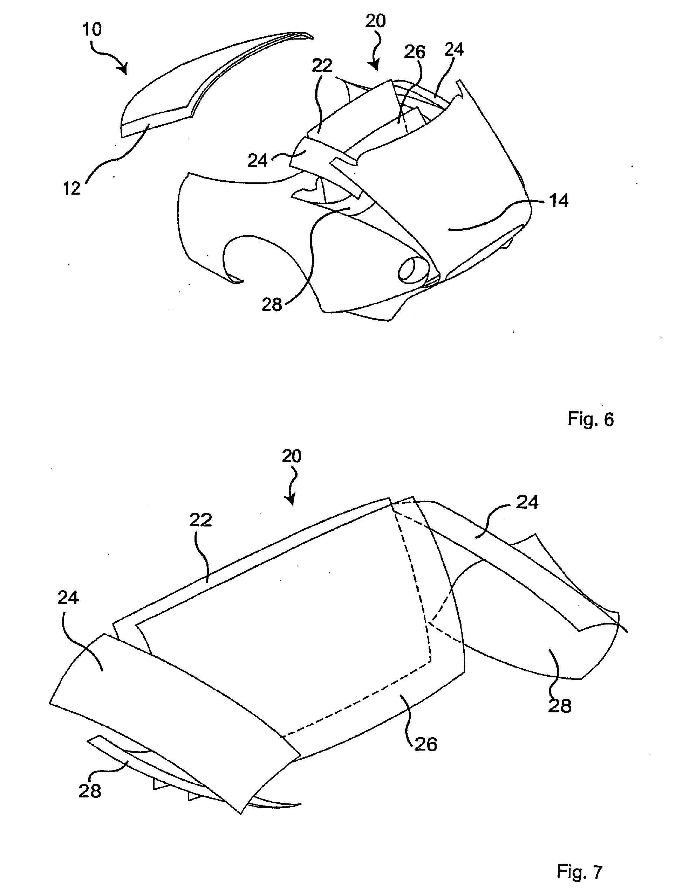

Durch weiter fortgesetzte Öffnungsbewegungen erreicht die Dachstruktur 20 schließlich die in Fig. 6 dargestellte Position, in der das vordere Dachteil 22 parallel zu dem hinteren Dachteil 26 und vor diesem positioniert hinter der Rückbank (nicht dargestellt) des Fahrzeugs eingebracht ist. Die Dachrahmenteile 24, 28 sind dabei aufeinander gefaltet. Fig. 7 zeigt ebenfalls diesen Endzustand, d.h. das vollständig geöffnete Dachstruktur ohne den Heckdeckel beziehungsweise Kotflügelbereich des Fahrzeugs.

Zum Abschluss der Öffnungsbewegung wird schließlich der Heckdeckel 14 geschlossen, wodurch die Dachrahmenteile unter diesem in ihrem gefalteten Zustand verborgen werden. Der Kofferraum ist ohne Beladehilfe erreichbar.

Die Schließbewegung der Dachstruktur verläuft in umgekehrter Reihenfolge.

Der wesentliche Aspekt der Erfindung liegt darin, ein vollständig zu öffnendes Fahrzeugdach für insbesondere ein zweisitziges Kraftfahrzeug (Roadstar) vorzusehen, das wenig Bauteile erfordert und mit Hilfe dessen großflächige, starre Dachteile in den Heckbereich des Fahrzeugs zum Öffnen des Fahrzeugdachs abgelegt werden können.

### Bezugszeichenliste

- 10: Heckbereich
- 12: Windschutzscheibenrahmen
- 14: Heckdeckel
- 20: Dachstruktur
- 22: vorderes Dachteil
- 24: vorderes, seitliches Dachrahmenteil
- 25: Scharnierpunkt zwischen vorderem Dachteil und vorderem Dachrahmenteilen
- 26: hinteres Dachteil
- 28: hinteres, seitliches Dachrahmenteil
- 29: Scharnierpunkt zwischen hinterem Dachteil und hinteren Dachrahmenteilen

## Patentansprüche

1. Dachstruktur (20) für ein zu öffnendes starres Kraftfahrzeugdach, enthaltend ein vorderes Dachteil (22), an das vordere Dachteil (22) sich seitlich anschließende vordere Dachrahmenteile (24), ein hinteres Dachteil (26) und an das hintere Dachteil (26) sich seitlich anschließende hintere Dachrahmenteile (28), wobei die vorderen und hinteren Dachrahmenteile (24, 28) bezüglich einander um eine senkrecht zur Fahrzeuglängsebene verlaufende Achse schwenkbar und in eine Position, in der ihre Innenseiten zueinander gerichtet sind, ablegbar sind und das vordere Dachteil (22) bezüglich der vorderen Dachrahmenteile (24) und das hintere Dachteil (26) bezüglich der hinteren Dachrahmenteile (28) um jeweils eine senkrecht zur Fahrzeuglängsebene verlaufende Achse verschwenkbar ist, wobei das vordere Dachteil (22) bezüglich der vorderen Dachrahmenteile (24) um eine im Wesentlichen senkrecht zur Fahrzeuglängsrichtung liegende Achse (25) verschwenkbar ist, die mit den Dachrahmenteilen und dem Dachteil mitbeweglich ist und in einem vorderen Bereich der vorderen Dachrahmenteile und des vorderen Dachteils in Fahrzeuglängsrichtung liegt.

2. Dachstruktur (20) nach Anspruch 1, **dadurch gekennzeichnet, dass** in der offenen Position der Dachstruktur das vordere Dachteil (22) und das hintere Dachteil (26) in im Wesentlichen vertikaler Position hinter einem Fahrgastraum des Fahrzeugs positioniert sind.

3. Dachstruktur (20) nach Anspruch 2, **dadurch gekennzeichnet, dass** in der offenen Position der Dachstruktur das vordere Dachteil (22) in Fahrzeugvorwärtsfahrtrichtung vor dem hinteren Dachteil (26) liegt und die Unterseite des hinteren Dachteils (26) der Oberseite des vorderen Dachteils (22) zugewandt ist.

4. Dachstruktur (20) nach einem der vorhergehenden Ansprüche, **dadurch gekennzeichnet, dass** das hintere Dachteil (26) bezüglich der hinteren Dachrahmenteile (28) um eine im Wesentlichen senkrecht zur Fahrzeuglängsrichtung liegende Achse (29) verschwenkbar ist, die mit den Dachrahmenteilen und dem Dachteil mitbeweglich ist und in einem mittleren Bereich der hinteren Dachrahmenteile und des hinteren Dachteils in Fahrzeuglängsrichtung liegt.

5. Dachstruktur (20) nach einem der vorhergehenden Ansprüche, **dadurch gekennzeichnet, dass** die Schwenkrichtung des vorderen Dachteils (22) bezüglich der vorderen Dachrahmenteile (24) entgegengesetzt zur Schwenkrichtung des hinteren Dachteils (26) bezüglich der hinteren Dachrahmenteile (28) ist.

6. Dachstruktur (20) nach einem der vorhergehenden Ansprüche, **dadurch gekennzeichnet, dass** in der offenen Position der Dachstruktur die Dachrahmenteile (24, 28) mit ihren Unterseiten aufeinander gefaltet und in den Heckbereich des Fahrzeugs unter einer Heckklappe (14) ablegbar sind.

7. Dachstruktur (20) nach einem der vorhergehenden Ansprüche, **dadurch gekennzeichnet, dass** das vordere Dachteil (22) und das hintere Dachteil (26) jeweils einstückige Dachelemente sind.

## Claims

1. A roof structure (20) for a rigid automotive roof that can be opened, comprising a front roof section (22), front roof frame sections (24) laterally adjoining the front roof section (22), a rear roof section (26) and rear roof frame sections (28) laterally adjoining the rear roof section (26), wherein the front and rear roof frame sections (24, 28) are pivotable with respect to each other about an axis extending perpendicular to the longitudinal plane of the vehicle, and are storable in a position, in which their internal faces face each other, and wherein the front roof section (22) is pivotable relative to the front roof frame sections (24) and the rear roof section (26) is pivotable relative to the rear roof frame sections (28) about a respective axis extending perpendicular to the longitudinal plane of the vehicle, wherein the front roof section (22) is pivotable relative to the front roof frame sections (24) about an axis (25) extending substantially perpendicular to the longitudinal direction of the vehicle, the axis (25) being movable together with the roof frame sections and the roof section and being located in a front portion of the front roof frames sections and of the front roof section in the longitudinal direction of the vehicle.

2. Roof structure (20) according to claim 1, **characterized in that**, in the open position of the roof structure, the front roof section (22) and the rear roof section (26) are positioned in a substantially vertical position behind a passenger compartment of the vehicle.

3. Roof structure (20) according to claim 2, **characterized in that**, in the open position of the roof structure, the front roof section (22) is positioned in front of the rear roof section (26) in a forward driving direction of the vehicle and the lower face of the rear roof section (26) faces the upper face of the front roof section (22).

4. Roof structure (20) according to any one of the preceding claims, **characterized in that** the rear roof section (26) is pivotable relative to the rear roof frame sections (28) about an axis (29) extending substantially perpendicular to the longitudinal direction of the vehicle, the axis (29) being movable together with the roof frame sections and the roof section and being located in a middle portion of the rear roof frame sections and of the rear roof section in the longitudinal direction of the vehicle.

5. Roof structure (20) according of any one of the preceding claims, **characterized in that** the pivoting direction of the front roof section (22) relative to the front roof frame sections (24) is opposite to the pivoting direction of the rear roof section (26) relative to the rear roof frame sections (28).

6. Roof structure (20) according to any one of the preceding claims, **characterized in that**, in the open position of the roof structure, the roof frame sections (24, 28) are folded such that their lower faces face each other and are storable under a rear lid (14) in the rear portion of the vehicle.

7. Roof structure (20) according to any one of the preceding claims, **characterized in that** the front roof section (22) and the rear roof section (26) are integral roof sections, respectively.

## Revendications

1. Structure de toit (20) pour un toit rigide de véhicule automobile susceptible d'être ouvert, comprenant une partie de toit avant (22), des éléments de cadre de toit avants (24) reliés latéralement à la partie de toit avant (22), une partie de toit arrière (26) et des éléments de cadre de toit arrières (28) reliés latéralement à la partie de toit arrière (26), les éléments de cadre de toit avants et arrières (24, 28) pouvant pivoter les uns par rapport aux autres, autour d'un axe s'étendant perpendiculairement au plan longitudinal du véhicule, dans une position dans laquelle leurs côtés intérieurs sont orientés les uns vers les autres et peuvent être rangés, et la partie de toit avant (22) peut pivoter par rapport aux éléments de cadre de toit avants (24) et la partie de toit arrière (26) peut pivoter par rapport aux éléments de cadre de toit arrières (28), respectivement autour d'un axe s'étendant perpendiculairement au plan longitudinal du véhicule,
dans laquelle la partie de toit avant (22) peut pivoter par rapport aux éléments de cadre de toit avants (24), autour d'un axe (25) s'étendant essentiellement perpendiculairement au sens longitudinal du véhicule, lequel est mobile conjointement avec les éléments de cadre de toit et la partie de toit, et s'étend dans une région avant des éléments de cadre de toit avants et de la partie de toit avant dans le sens longitudinal du véhicule.

2. Structure de toit (20) selon la revendication 1, **caractérisée en ce que**, dans la position ouverte de la structure de toit, la partie de toit avant (22) et la partie de toit arrière (26) sont disposées dans une position essentiellement verticale derrière un espace passager du véhicule.

3. Structure de toit (20) selon la revendication 2, **caractérisée en ce que**, dans la position ouverte de la structure de toit, la partie de toit avant (22) se trouve devant la partie de toit arrière (26) dans le sens de marche avant du véhicule, et la face inférieure de la partie de toit arrière (26) est tournée vers la face supérieure de la partie de toit avant (22).

4. Structure de toit (20) selon l'une des revendications précédentes, **caractérisée en ce que** la partie de toit arrière (26) peut pivoter par rapport aux éléments de cadre de toit arrières (28), autour d'un axe (29) s'étendant essentiellement perpendiculairement au sens longitudinal du véhicule, lequel est mobile conjointement avec les éléments de cadre de toit et la partie de toit, et s'étend dans une région centrale des éléments de cadre de toit arrières et de la partie de toit arrière dans le sens longitudinal du véhicule.

5. Structure de toit (20) selon l'une des revendications précédentes, **caractérisée en ce que** le sens de pivotement de la partie de toit avant (22) par rapport aux éléments de cadre de toit avants (24) est opposé au sens de pivotement de la partie de toit arrière (26) par rapport aux éléments de cadre de toit arrières (28).

6. Structure de toit (20) selon l'une des revendications précédentes, **caractérisée en ce que**, dans la position ouverte de la structure de toit, les éléments de cadre de toit (24, 28) sont repliés les uns sur les autres par leurs côtés inférieurs et peuvent être rangés dans la région arrière du véhicule, sous un hayon (14).

7. Structure de toit (20) selon l'une des revendications précédentes, **caractérisée en ce que** la partie de toit avant (22) et la partie de toit arrière (26) constituent chacune un élément monobloc.
